# EUROPEAN PATENT SPECIFICATION

(11) **EP 2 011 767 B1**
(45) Date of publication and mention of the grant of the patent: **27.11.2013**
(21) Application number: 07747849.3
(22) Date of filing: 13.03.2007
(51) Int. Cl.: B01J 20/10, C02F 1/66, B01J 20/04, B01J 20/34, C02F 1/28

(54) **WATER TREATING METHOD**
WASSERBEHANDLUNGSVERFAHREN
PROCÉDÉ DE TRAITEMENT D'EAU

(30) Priority: 27.03.2006 RU 2006109498
(43) Date of publication of application: 07.01.2009
(73) Proprietor: Otkrytoe Aktsionernoe Obshchestvo Nauchno-Proizvodstvennoe Predpriyatie "Radii", Moscow 125057 (RU)
(72) Inventor: KHAMIZOV, Ruslan Khazhsetovich, Moscow, 119048 (RU); KONOV, Magomet Abubekirovich, Moscow, 121096 (RU)
(74) Representative: Röthinger, Rainer
(86) International application number: PCT/RU2007/000117
(87) International publication number: WO 2007/111531

(56) References cited:
- FI-A- 923 954
- JP-A- 54 040 291
- JP-A- 2004 344 714
- RU-A- 99 117 320
- RU-C1- 2 047 558
- RU-C1- 2 076 846
- RU-C1- 2 136 608
- NIKOLADZE N.I. ET AL.: 'Podgotovka vody dlya pityevogo i promyshlennogo vodosnabzhenya' VYSCHAYA SHKOLA 1984, pages 160 - 165
- ZHURBA M.G. ET AL.: 'Vodosnabzhenie, Proektirovanie sistem i sooruzheny' IZDATELSTVO ASSOTSIATSII STROITELNYKH VUZOV 2004, pages 269 - 270, XP008136175
- KOGANOVSKY A.M. ET AL.: 'Ochistka i ispolzovanie stochnykh vod v promyshlennom vodosnabzhenii' KHIMIYA 1983, pages 224 - 225
- YAKOVLEV S.Y. ET AL.: 'Vodootvedenie i ochitska stochnykh vod' IZDATELSTVO ASSOTSIATSII STROITELNYKH VUZOV 2002, page 379

## Description

### The technical field

The invention relates to water conditioning methods, namely, water purification from mechanical suspensions and contaminating solutes by its filtration through granulated materials.

### The background art

There are known methods of water conditioning comprising water purification by its filtration through natural and man-made granulated materials, such as quartz sand, clays, natural and artificial zeolites, activated alumina, as well as other known sorptive and ion exchange organic and inorganic materials: Encyclopedia of life support systems.-V.III.- Knowledge base for sustainable development/Novitsky E.G., Khamizov R.Kh.//Chapter 8.-Water and waste water treatment.-Oxford, Uk.: EOLSS publ.co., 2002, pp. 305-325 [1]; Kul'sky L.A., Strokach P.P. Tekhnologiya ochistki prirodnykh vod (Technology of natural waters purification).- Kiev, Vysshaya Shkola publ., 1986, pp.193-222 [2].

Principal drawback of these methods lies in impossibility of performing integrated water purification utilizing one and the same material. For example, to ensure water purification from a group of the most widespread contaminating substances, such as iron, manganese, fluorine, boron, non-ferrous and heavy metals, it is necessary to utilize a series of granulated sorptive and ion exchange materials.

There are known methods of water conditioning utilizing specially synthesized filtering and sorption materials, providing for batch water purification from such components as iron, manganese and heavy metals: RU patent No. 2238788, publ. 27.10.2004 [3]; RU patent No. 2241535, publ. 10.12.2004 [4].

One of the main components of such materials comprises slightly soluble substances possessing alkalizing buffer action. Contact with the surface of such solid phase buffer promotes coagulation of iron hydroxide, exhibiting, in its turn, sorption activity in relation to heavy metal ions. Principal drawback of such methods lies in relatively high cost of sorption materials comprising specially deposited artificial catalytic layer of manganese or other metal oxides, which promote the process of ferrous iron oxidation. Another drawback is limited range of contaminating components removed from water. At the same time, there is known a promising class of natural materials for water conditioning - serpentinites, including a group of minerals, the main one being serpentine, a magnesium hydroxysilicate. Said mineral essentially retains principal properties of magnesium hydroxyde, displaying alkalizing buffering ability and additional sorption activity in relation to such components as fluorine and boron. At the same time, unlike magnesium hydroxyde, hydroxysilicate has grain strength comparable with that of silicate materials and quartz sand. Apart from serpentine, serpentinite contains also admixtures of hydrated metal oxides: aluminium, iron, and manganese, which are natural catalysts. Said material had been utilized previously for waste water treatment (SU inventor's certificate No. 947077, publ. 30.07.1982. [5]).

There is known a method of water purification in open water bodies from acidulation and from heavy metal ions, comprising water treatment by the way of addition pulverized serpentinite, preliminarily subjected to thermal activation at temperature of 650 - 820 °C (RU patent No. 2136608, publ. 10.09.99 [6]).

Main drawback of this method lies in its high cost, due to irreversible waste of material, specially prepared by energy-intensive method.

The most close to the invention proposed is a method of water conditioning according to RU patent application No. 991173207, publ. 20.06.2001 [7], comprising water purification from mechanical suspended matter and solutes by its filtration through a layer of granulated serpentinite, which is periodically washed by reverse flow of water at high flow rate, ensuring loosening of the upper sorptive layer, or is preliminarily air blown, and then washed with water.

This method has a drawback of gradual decrease of the sorption activity of serpentinite due to irreversible «fouling» of sorbent granules surface with products of magnesium hydroxysilicate interaction with components of purified water. Another drawback of this method lies in a limited range of contaminating components removed from water due to low sorption activity of natural untreated serpentinite, or serpentinite treated with water and air only, in relation to heavy metals, as well as to boron and fluorine compounds.

The invention proposed solves the problem of achieving technical result consisting in improvement of purified water quality and reducing the cost of water conditioning process due to increase in sorption activity of serpentinite material, broadening the range of contaminating components removed, as well as increase in operational life time of a single charge of granulated material. The technical result achieved includes also ensuring customers supply with freshly purified water, its conformity with statutory requirements being achieved directly in the purification process, without averaging its composition and without necessity to keep for this purpose a reserve of purified water.

### Disclosure of the invention

The water conditioning method proposed, similar to the most close one, as known from patent application [7], comprises water filtration through a layer of granulated serpentinite and its periodic washing by aqueous or aqueous-air method.

To achieve said technical result, as distinct from the method known from patent application [7], the use is made of serpentinite with granules size 0.15 ÷ 2 mm, and additionally periodic treatment of serpentinite layer is performed with alkaline solution at time intervals not exceeding that at which «breakthrough» of the least sorbed contaminating component above its maximum permissible concentration takes place.

Said technical result is achieved utilizing any alkali solutions, because in the course of alkali treatment, as it had been established by authors, serpentinite acquires properties of inorganic anion exchanger having increased concentration of hydroxyl groups on external granules surface and developed internal pore surface. This results in selective sorption of a number of anions, such as boron and fluorine anions, as well as in coagulation of iron and manganese compounds and sorption of non-ferrous and heavy metal cations. At that, the possibility of achieving said technical result is independent of the alkali solution concentration. The latter is affecting only the efficiency indices of the process: ratio of purified water volume to alkali volume, level of sorption activity, etc.

At serpentinite granules size below 0.15 mm, a pressure above 0.6 MPa is required for water pumping through the layer, thus creating specific requirements to the equipment. At granules size above 2 mm, surface capacity of serpentinite in relation to contaminating components, as well as rate of their sorption process decrease to such extent that the material becomes virtually inert, that is, loses its sorption activity.

Due to said choice of the upper limit of the treatment frequency of serpentinite layer with alkaline solution, consumer supply with purified water may be ensured regardless of conditions availability for its accumulation and composition averaging.

Besides, the above choice of said range makes non-critical such process parameters, as duration of treatment with alkaline solution and volume of this solution, because requirements to the quality of purification are met in any case.

In order to enable realization of further filtration cycles of water purification with its repetitious quality, duration of treatment with alkaline solution and volume of said solution may be determined, for example, from the condition that no less than 90% of the most sorbed contaminating component, extracted from the water purified in the course of its previous filtration cycle, should be desorbed.

It is most expedient to use as an alkali solution solutions of sodium, potassium, ammonium, and calcium hydroxides, as well as sodium and potassium carbonates, or their mixtures in different combinations, with alkalinity no less than 0.01 g-eq/l. At lower concentrations and prolonged utilization of one and the same single charge of granulated material, volume of purified water becomes comparable with the volume of alkali solution used for treatment. Upper limit of concentration is non-critical and may be close to solubility. However, it is obviously inexpedient to choose concentration, above which further increase in sorption activity is not observed.

Treatment with alkaline solution may be performed by its filtration through a layer of granulated material both in the direction of filtration flow during water purification and in opposite direction.

The advantage of filtration in forward direction lies in possibility of its being performed under small pressure. Advantage of filtration in opposite direction lies in possibility of reducing alkali solution consumption, which is caused by deeper purification of the bottom part of serpentinite layer (determining the "breakthrough" of contaminating components).

The method proposed may be accomplished, for example, in such a way that in the beginning of each filtration cycle first batch of water obtained, corresponding to 3÷5 layer volumes of granulated material, is separated from further batches of purified water and used to prepare alkali solution for serpentinite treatment in the next cycle. This provides for decrease in alkali consumption and completeness of alkali solution displacement from the layer of granulated serpentinite, accounting for its properties, in order to prevent penetration of this solution into purified water.

Water filtration in the method proposed is preferably carried out through two or more sequentially situated layers of granulated serpentinite. At that, duration of the filtration cycle may be determined from "breakthrough" of the least sorbed contaminating component through the last downstream layer, followed with treatment of the first downstream layer with alkaline solution. This embodiment of the method proposed increases the degree of serpentinite work-out with respect to contaminating components, and, ultimately, leads to the decrease in alkali solution consumption.

Besides, in this case it is possible to perform, simultaneously with water filtration through several sequentially situated layers, a treatment with alkaline solution of one more layer, currently not participating in the filtration, and after completion of the treatment, to utilize this layer for the replacement of the last downstream filter layer, used to replace the first filter layer, which is sent to the treatment with alkaline solution. This embodiment of the method proposed provides for the possibility of a continuous water purification process.

### Brief describing of the figures in the drawings

The invention proposed is illustrated with figures.
Fig. 1 presents initial curve of iron sorption from natural water with increased concentration of ferrous iron by granulated serpentinite treated with alkali solution, as compared with initial curve for untreated material.
Fig. 2 and Fig. 3 present initial sorption curves of fluorine, specially added to tap water, by alkali-treated serpentinite, and curves of fluorine desorption from the sorbent by alkali solution in two sequential sorption-regeneration cycles.
Fig. 4 and Fig. 5 present initial curves of boron sorption from desalinated seawater on treated serpentinite, and curves of boron desorption from the sorbent by alkali solution in two sequential cycles of sorption-regeneration.
Fig. 6 presents schematic diagram of a plant utilized for pilot tests of water conditioning technology on base of the method proposed.

The Examples of carrying out the invention

The examples below provide results of the experimental studies simulating conditions of realization of the method proposed.

### Example 1.

Four identical laboratory ion exchange columns are used, having 0.8 cm internal diameter and 20 cm height, which were charged each with 5 ml of the following granulated materials:
column No.1 - serpentinite of Bedeni deposit with grain size of 2÷3 mm;
column No.2 - the same serpentinite with grain size of 0.5÷2 mm;
column No.3 - the same serpentinite with grain size of 0.5÷2 mm, preliminarily treated with alkaline solution;
column No.4 - quartz sand with grain size of 0.8÷1.2 mm.

For treatment with alkaline solution, 60 ml of 0.1% NaOH solution with alkalinity 0.025 g-eq/l have been passed through column No.3 at a rate of 15 ml/h. One and the same test solution is fed to columns from pressure reservoirs provided wuth hydraulic device to maintain constant rate.

To prepare model test solution, Moscow tap water had been used, supplemented with specified quantity of iron as calculated amount of 0.1 N ammonium ferrous sulphate (Fe^{+II}) solution to iron concentration of 1.45 mg/l. In order to stabilize the initial solution, it was supplemented with organic complexing agent - ascorbic acid - up to concentration of 10 mg/l. Test solution had been passed through each of the columns at the rate of 50 ml/h (10 column volumes per hour). Solutions leaving the columns had been sampled as 25 ml fractions, which were analyzed for iron content.

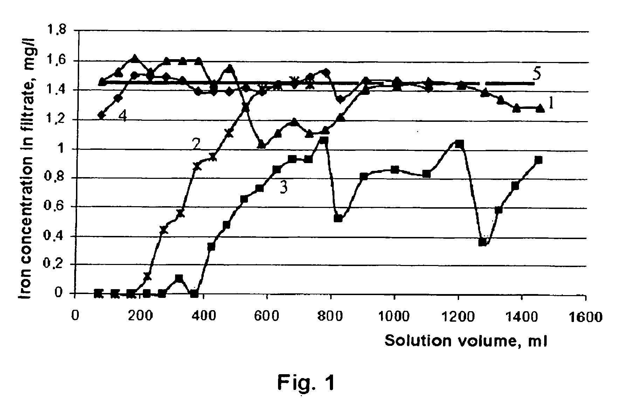

It is seen from Fig. 1 that under test conditions breakthrough of the target component is observed on samples from columns No.1 and No.4 (coarse-grained serpentinite and quartz) already in the first filtrate probes, as can be seen from initial curves 1 and 4. After passing approximately 100 ml of test solution (ab. 20 column volumes), its content becomes virtually equal to the initial one. Their iron capacity amounts to ab. 0.65 and 3.2 mg/g, correspondingly.

For the sample from column No.2 (initial curve 2), iron sorption from 200 column volumes (1000 ml) is observed. At that, iron accumulation in the layer of test sorbent amounts to approximately 108 mg/g.

For the alkali-treated sample from column No.3 (initial curve 3), the greatest iron removal rate is observed. Initial iron concentration, corresponding to curve 5, is not achieved in filtrate over the time of experiment. At that, iron accumulation in the layer of test sorbent amounts to approximately 245 mg/g.

### Example 2.

In experiments on water purification from fluorine, an ion exchange column had been used with 0.8 cm internal diameter and 20 cm height, which was charged with 5 ml of serpentinite having 0.5÷1.2 mm grain size.

Following operations have been performed sequentially.

A. 60 ml of 1% NaOH solution (alkalinity 0.25 g-eq/l) have been passed through column at a rate of 15 ml/h (3 column volumes per hour).

B. Thereafter, test solution had been passed through the column from pressure reservoir equipped with hydraulic device to maintain constant rate. To prepare test model solution, Moscow tap water had been used with addition of specified quantity of fluorine as calculated amount of sodium fluoride to fluorine concentration of 3.65 mg/l. Passage through a column had been performed at a rate of 50 ml/h (10 column volumes per hour). Solution leaving the column had been sampled as 25 ml fractions, which were analyzed for fluoride content by ionic chromatography.
C. All operations in A are repeated.
D. All operations in B are repeated.
E. All operations in A are repeated.

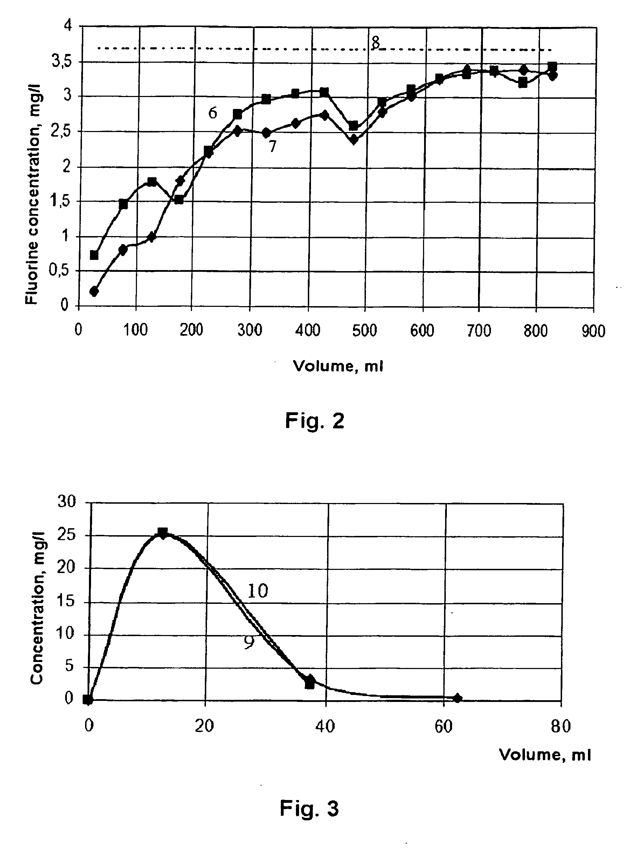

Fig. 2 presents initial sorption curve 6 for the first cycle, which remains below line 8 of initial concentration. Fluoride sorption continues until passing more than 800 ml of initial solution, that is, up to 160 column volumes. Curve 7 in Fig. 2 of fluoride sorption in the second cycle is virtually completely identical to corresponding curve 6 for the first cycle.

Total sorbed in the first cycle: 0.731 mg of fluorine (0.146 mg/g of sorbent). Sorbed in the second cycle - 0.688 mg of fluorine (0.14 mg/g of sorbent). Fig. 3 presents initial curves 9 and 10 of fluoride desorption (sorbent regeneration), correspondingly, after first and second water purification cycles performed as described above. Curves are virtually identical. Desorbed in the first cycle of regeneration: 0.686 mg of fluorine (0.14 mg/g of sorbent). Desorbed in the second cycle of regeneration: 0.689 mg of fluorine (0.14 mg/g of sorbent).

The example presented illustrates possibility of selective fluoride sorption on serpentinite for water purification from fluorine, and retention by material, treated with alkaline solution, of sorption properties in relation to fluorides.

### Example 3.

In experiments on water purification from boron, a model solution had been used of desalinated seawater having following composition: NaCl - 0.73 g/l; MgSO₄ - 0.20 g/l, B - 1.5 mg/l (Na₂B₄O₇·10H₂O - 13.8 mg/l). An ion exchange column is used with 0.8 cm internal diameter and 20 cm height, which had been charged with 5 ml of serpentinite having grain size of 0.5÷1.2 mm.

Following operations have been performed sequentially.

A. 50 ml of 1% NaOH solution (alkalinity 0.25 g-eq/l) had been passed through the column at a rate of 15 ml/h (3 column volumes per hour).

B. Thereafter, test solution had been passed through the column from pressure reservoir equipped with hydraulic device to maintain constant rate. Passage through the column had been performed at a rate of 25 ml/h (5 column volumes per hour). Effluent solution from the column is sampled as 25 ml fractions, which were analyzed for boron content by technique based on complex formation between boric acid and mannitol, as described in monograph: Nemodruk A. A., Karalova Z. K. Analiticheskaya Khimiya Bora (Boron analytical chemistry).- Moscow: Nauka, 1961. p. 48 [8] (in Russian). Phenolphtalein had been used as an indicator to fix the point of equivalence.
C. All operations in A are repeated.
D. All operations in B are repeated.
E. All operations in A are repeated.

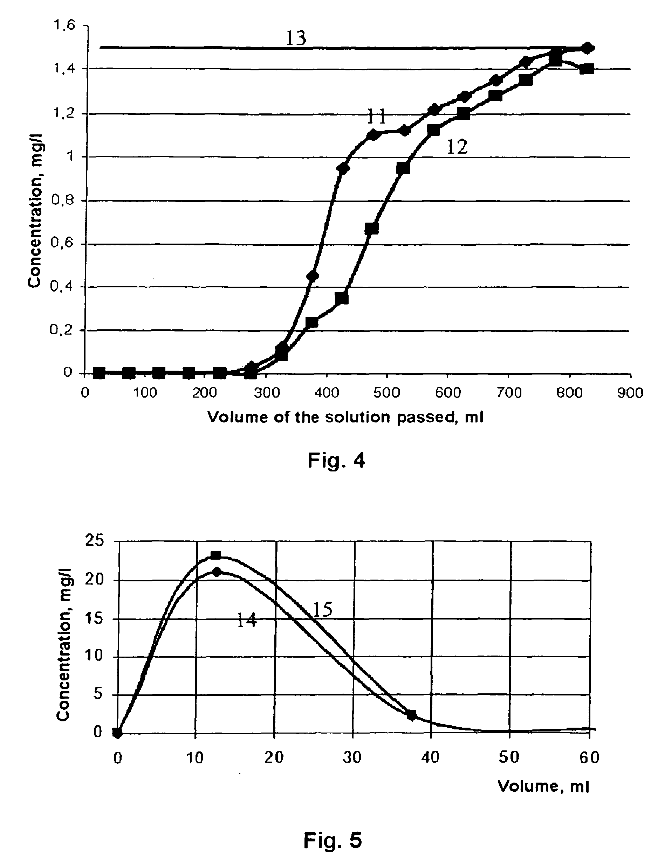

Fig. 4 presents initial sorption curve 11 for the first cycle, which remains below line 13 of initial concentration.

Boron sorption comtinues on passing more than 750 ml of the initial solution, that is, up to 150 column volumes. The initial curve 12 of fluoride sorption in the second cycle, presented in Fig. 4, is virtually identical to corresponding curve 6 for the first cycle.

Total sorbed in the first cycle: 0.62 mg of boron (0.125 mg/g of sorbent). Sorbed in the second cycle: 0.69 mg of boron (0.14 mg/g of sorbent).

Fig. 5 presents initial curves 14 and 15 of boron desorption (sorbent regeneration), correspondingly, after first and second cycles of the model solution treatment. Curves are virtually identical.

Desorbed in the first regeneration cycle: 0.61 mg of boron (0.12 mg/g of sorbent). Desorbed in the second regeneration cycle: 0.64 mg of boron (0.13 mg/g of sorbent).

This example illustrates possibility of selective boron sorption on serpentinite, and retention by material, treated with alkaline solution, of sorption properties in relation to boron.

### Example 4.

As an initial solution being treated, artesian water had been used with composition presented in Table 1, column 4. Ion exchange column had been used with 0.8 cm internal diameter and 20 cm height, which had been charged with 5 ml of serpentinite having 0.5÷1.2 mm grain size.

80 ml of 0.5% NaOH solution (alkalinity 0.13 g-eq/l) had been passed through the column at a rate of 15 ml/h (3 column volumes per hour). Thereafter, 850 ml of test solution had been passed through the column at a rate of 50 ml/h (10 column volumes per hour). Effluent solution from column is sampled as one cumulative fraction and analyzed for iron, fluorine, boron, and non-ferrous metals content by the above techniques, as well as by atomic absorption spectrometry.

The results obtained, which are listed in Table 1, column 5, demonstrate that water quality corresponding to hygienic regulations for potable water (Table 1, column 3) is achieved for all the components.

### Example 5.

All operations had been performed as described in Example 4, with the difference that 1% soda salt (Na₂CO₃) solution (alkalinity 0.2 g-eq/l) was used as an alkali solution.

The results obtained, presented in Table 1, column 6, demonstrate that water quality, corresponding to hygienic regulations for potable water, had been achieved for all components.

### Example 6.

All operations had been performed as described in Example 4, with the difference that 250 ml of 0.09% Ca(OH)₂ solution (alkalinity 0.025 g-eq/l) was used as an alkali solution, which was passed through the column at a rate of 25 ml/h (5 column volumes per hour).

The results obtained, presented in Table 1, column 7, demonstrate that water quality, corresponding to regulations for potable water, had been achieved for all components.

**Table 1**

| Results of laboratory experiments on water purification | | | | | | |
|---|---|---|---|---|---|---|
| Parameters | Units of measurement | Requirements (Sanitary Code of Practice 2.1.1074-01) | Initial water | Purified water (Example 4) | Purified water (Example 5) | Purified water (Example 6) |
| 1 | 2 | 3 | 4 | 5 | 6 | 7 |
| Turbidity | mg/l (by kaoline) | ≤ 2.0 | 3.17 | 0.33 | 0.53 | 0.89 |
| Iron | mg/l | ≤ 0.3 | 0.49 | 0.12 | 0.14 | 0.12 |
| Manganese | mg/l | ≤ 0.1 | 0.23 | 0.03 | 0.06 | 0.04 |
| Fluorine | mg/l | ≤ 1.2 | 1.66 | 0.45 | 0.67 | 0.39 |
| Boron | mg/l | ≤ 0.5 | 0.68 | 0.11 | 0.18 | 0.14 |
| Zinc | mg/l | ≤ 3.0 | 0.86 | 0.09 | 0.23 | 0.15 |
| Copper | mg/l | ≤ 1.0 | 0.65 | 0.06 | 0.13 | 0.09 |
| Lead | mg/l | ≤ 0.03 | 0.02 | <0.01 | <0.01 | <0.01 |

### Example 7

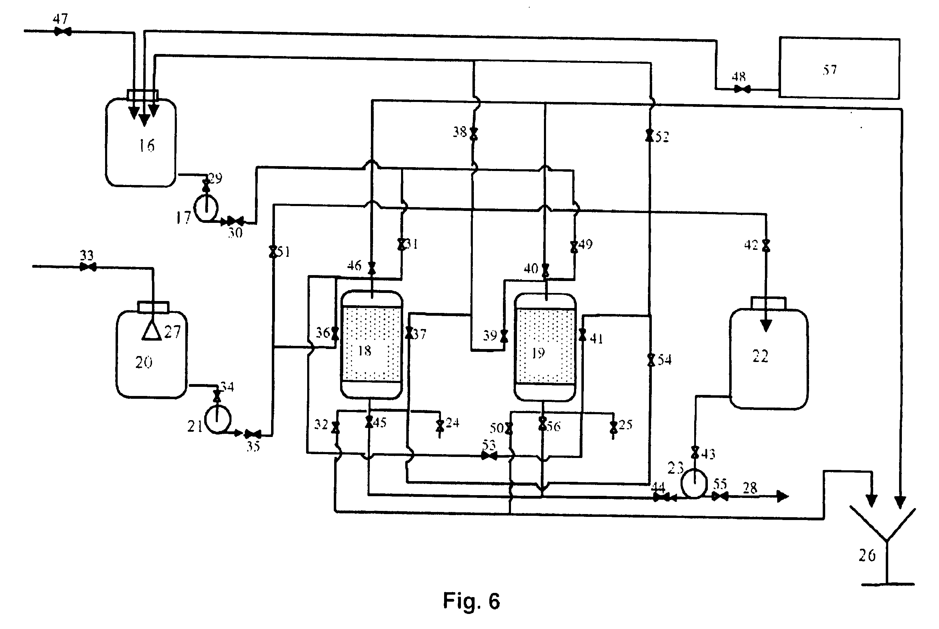

Pilot tests on water conditioning have been performed, comprising integrated treatment of artesian water with installation shown in Fig. 6.

In this figure:
16 denotes source reservoir for alkali solution;
17 is a feed pump for alkali solution;
18, 19 are sorption filters charged each with 1 m³ of granulated serpentinite having grain size of 0.8-1.2 mm;
20 is an intermediate reservoir for initial water;
21 denotes a pump for initial water feed to the sorption filters;
22 denotes collecting reservoir for purified water;
23 is a pump for filters loosening and for purified water distribution;
24, 25 are samplers;
26 is sewage outlet;
27 denotes spray nozzle;
28 is purified water feedline to consumer;
29-56 are valves (stopcocks);
57 denotes storage facilities (reservoir) for wet alkali storage, of a standard design, comprising feed pump for concentrated alkali solution.

Subjected to treatment had been initial artesian water of composition listed in Table 2, column 4.

The process of pilot tests utilizing installation shown in Fig. 6, included carrying out sequentially of operations listed below.

A. Alkali solution, comprising 1% NaOH solution, withdrawn from reservoir 16 by means of pump 17, is passed through sorption filter 18 at a rate of 4 m³/h for 2,5 hours. The solution exiting filter is directed to sewage outlet 26 and further on to water treatment facilities. When performing said operations, valves 29-32 are open. Other valves are closed.

B. Initial water is fed to intermediate reservoir 20 through spray nozzle 27 to provide required air content in it. Water is drawn from reservoir by means of pump 21 and passed through filter 18 at a rate of 10 M³/h. Solution leaving the filter 18 is fed for 30 minutes into reservoir 16 to prepare alkali solution (altogether 5 m³) for the next regeneration cycle. Required mode of passage at this stage is ensured by opening valves 33-38 in Fig. 6, all other valves being closed. Thereafter, effluent solution is fed to sorption filter 19 and the process is continued by sequential passing through filters 18 and 19, performing corresponding switchings by means of valves 38, which are closed, and 39, 41, and 42, which are opened. Purified water is supplied to collecting reservoir 22, wherefrom it is fed to customers by pump 23 through line 28 at open valves 43 and 55.

In the course of water conditioning process, purified water is periodically, every 2 hours, analyzed on fluorine content, as the least sorbed component. In order to carry out the analyses, samples of purified water are taken via sampler 25. Purification process is terminated on reaching fluorine concentration in effluent solution above 1.2 mg/l. Altogether, 145 m³ of initial water is purified.

Average composition of purified water, calculated on base of all samples analyses, is listed in Table 2, column 5.
C. Purified water is fed to filter 18 by means of pump 23 in upwards flow direction at a rate of 30 M³/h for 5 minutes. Said operation ensures loosening of sorption material charge and removal of virtually total quantity of iron extracted from water as a clear suspension of its hydroxide. Said suspension is fed to sewage 26 and further on to water treatment facilities. To perform the above operations, valves 43-46 are preliminarily opened, while all other are closed. After performing said operation of loosening, 1 st cycle of water treatment is completed.
D. Additional 5 m³ of tap water are fed into reservoir 16 through valve 47 and solution in said reservoir is strengthened up to obtain 1% alkali solution. For this, 25% solution of sodium hydroxide from the storage facilities (reservoir) of wet alkali storage 57 is fed through valve 48.
E. Alkali solution withdrawn from reservoir 16 by means of pump 17 is passed through sorption filter 19 at a rate of 4 m³/h. The duration of alkali solution passage is determined by manganese content in regenerate withdrawn from sampler 24, as the most sorbed component. The process is continued until reaching manganese concentration in effluent solution below 0.1 mg/l. This corresponds to desorption of no less than 90% of said element quantity absorbed from water in the course of its purification according to B. Altogether, 9,2 m³ of alkali solution is passed through the filter. Effluent solution from filter 19 is directed to sewage 26 and further on to water treatment facilities. To perform the above operations, valves 29, 30, 49, and 50 are preliminarily opened, and others are closed.
F. Initial water is fed into intermediate reservoir 20 through spray nozzle 27 and withdrawn from reservoir by means of pump 21 and passed through filter 19 at a rate of 10 m³/h. Effluent solution from filter 19 is fed into reservoir 16 for 30 min. to prepare alkali solution (altogether, 5 m³ is fed) for the next regeneration cycle. At that, valves 34, 35, 51, 39, 41, and 52 are open, and other are closed. Thereafter valves 41 and 52 are closed, valves 53, 54, and 42 are opened, and the process is continued by sequentially passing water through filters in the direction from position 19 to position 18. Purified water is directed to collecting reservoir 22, wherefrom it is fed to consumer with pump 23 by line 28 through open valves 43 and 55. In the course of water conditioning process, purified water is periodically, every 2 hours, analized for its fluorine content, as the least sorbed component. To perform the analyses, samples of purified water are withdrawn through sampler 24. Purification process is terminated on reaching fluorine concentration in effluent solution above 1.2 mg/l. Altogether, 160 m³ of initial water is purified.
G. Purified water is fed by means of pump 23 to filter 19 in upwards flow direction at a rate of 30 m³/h for 5 minutes. The suspension obtained is directed to sewage 26 and further on to water treatment facilities. To perform the above operations, valves 43, 44, 56, and 40 are preliminarily opened, and all other are closed. After carrying out of said loosening operation, 2nd cycle of water treatment is completed.
H. All operations in D are repeated, with the difference that 4,2 m³ of tap water is fed additionally into reservoir 16.
I. All operations in E are repeated, with the difference that alkali solution is passed through filter 18.
J. All operations in F are repeated, with the difference that alkali solution is passed at first through filter 18, and then sequentially through filters 18 and 19.

Averaged composition of purified water, calculated from analyses for all samples, and corresponding to 3rd purification cycle with one and the same charge of granulated serpentinite, is listed in Table 2, column 6.

K. All operations are repeated 8 times according to C-J. As a result, purified water is obtained, corresponding to 12th purification cycle with one and the same charge of granulated serpentinite. Averaged composition of purified water is listed in Table 2, column 7. The results obtained, presented in Table 2, demonstrate that water quality achieved for all components corresponds to hygienic regulations for potable water (Table 2, column 3).

**Table 2**

| Results of pilot tests on artesian water treatment | | | | | | |
|---|---|---|---|---|---|---|
| Parameters | Units of measurement | Requirements (Sanitary Code of Practice 2.1.1074-01) | Initial water | Purified water from 2nd cycle | Purified water from 3rd cycle | Purified water from 12^{th} cycle |
| 1 | 2 | 3 | 4 | 5 | 6 | 7 |
| Turbidity | mg/l (by kaoline) | ≤ 2.0 | 0.79 | 0.25 | 0.21 | 0.14 |
| Iron | mg/l | ≤ 0.3 | 0.59 | 0.12 | 0.11 | 0.12 |
| Manganese | mg/l | ≤0.1 | 0.13 | 0.02 | <0.01 | <0.01 |
| Fluorine | mg/l | ≤ 1.2 | 3.07 | 1.12 | 0.98 | 0.95 |
| Bop | mg/l | ≤ 0.5 | 0.56 | 0.10 | <0.05 | <0.05 |
| Zinc | mg/l | ≤ 3.0 | 0.73 | 0.09 | 0.13 | 0.11 |
| Copper | mg/l | ≤ 1.0 | 0.44 | 0.06 | 0.05 | 0.06 |
| Lead | mg/l | ≤ 0.03 | 0.015 | <0.01 | <0.01 | <0.01 |

### Industrial applicability

The presented data demonstrate that the method proposed may be used in drinking and domestic water supply systems, including production of potable water of the highest category, corresponding to Russian and international standards.

### Sources of information

1. Encyclopedia of life support systems.-V.III.- Knowledge base for sustainable development/Novitsky E.G., Khamizov R.Kh.//Chapter 8.-Water and waste water treatment.-Oxford, Uk.: EOLSS publ.co., 2002, pp. 305-325
2. Kul'skij L.A., Strokach P.P. Tekhnologiya ochistki natural'nykh vod (Technology of natural waters purification).- Kiev, Vysshaya shkola, 1986, pp.193-222 (in Russian).
3. RU patent No. 2238788, publ. 27.10.2004.
4. RU patent No. 2241535, publ. 10.12.2004.
5. SU inventor's certificate No. 947077, publ. 30.07.1982.
6. RU patent No. 2136608, publ. 10.09.99.
7. RU patent application No. 99117320, publ. 20.06.2001.
8. Nemodruk A.A., Karalova Z.K. Analiticheskaya khimiya bora (Boron analytical chemistry).- Moscow: Nauka, 1961. p. 48 (in Russian).

## Claims

1. A method of water conditioning, comprising water filtration through a layer of granulated serpentinite, **characterized in that** the serpentinite used has a grain size of 0.15 - 2 mm, which had been preliminarily transformed to anion-exchange material by treatment with alkaline solution, wherein the serpentinite layer is periodically treated with the alkaline solution at intervals not exceeding that at which a breakthrough occurs of the least sorbed contaminating component above its maximum permissible concentration.

2. The method according to claim 1, **characterized in that** solution of sodium, potassium, ammonium, or calcium hydroxide is used as an alkali solution, or solution of sodium or potassium carbonate, or their mixtures in different combinations, with alkalinity no less than 0.01 g-eq/l.

3. The method according to claim 1, **characterized in that** the treatment with alkaline solution is carried out by its filtration through layer of granulated serpentinite in the direction of filtration flow during water purification or in the opposite direction.

4. The method according to claim 3, **characterized in that** in the beginning of each filtration cycle, first portion of the water obtained, corresponding to 3 - 5 vol-umes of granulated serpentinite layer, is separated from further batches of purified water and used to prepare alkali solution for serpentinite treatment in the next cycle.

5. The method according to claim 3 or 4, **characterized in that** the water filtration is performed through two or more of sequentially situated layers of granulated serpentinite, the duration of the filtration cycle being determined by breakthrough of the least sorbed contaminating component through the last downstream layer, followed by treatment with alkaline solution of the first downstream layer.

6. The method according to claim 5, **characterized in that** simultaneously with water filtration through the several layers, treatment of one more layer with alkaline solution is carried out, the layer treated with alkaline solution being used in the next filtration cycle as the last downstream layer, which is used to replace the first layer, sent for treatment with alkaline solution.

7. The method according to any one of claims 3 to 6, **characterized in that** the duration of treatment with alkaline solution or volume of alkali solution is determined from the condition that no less than 90% of the most sorbed contaminating compo-nent, extracted from the water purified in the course of its previous filtration cycle, is desorbed.

8. The method according to any one of claims 3 to 7, **characterized in that** it includes a periodic washing of the layer of granulated serpentinite by an aqueous or water-air method.

## Patentansprüche

1. Wasseraufbereitungsverfahren, umfassend das Filtrieren von Wasser durch eine Schicht von gekörntem Serpentinit, **dadurch gekennzeichnet, dass** der verwendete Serpentinit eine Korngröße von 0,15 - 2 mm aufweist, die vorausgehend durch Behandlung mit alkalischer Lösung zu Anionenaustauschmaterial umgewandelt wurde, wobei die Serpentinitschicht periodisch mit einer alkalischen Lösung in Abständen behandelt wird, die diejenigen nicht übersteigen, bei welchen ein Durchbruch des am wenigsten sorbierten Verunreinigungsbestandteils über dessen maximal zulässige Konzentration auftritt.

2. Verfahren nach Anspruch 1, **dadurch gekennzeichnet, dass** eine Lösung von Natrium-, Kalium-, Ammonium- oder Calciumhydroxid als alkalische Lösung oder eine Lösung von Natrium- oder Kaliumcarbonat oder deren Mischungen in unterschiedlichen Kombinationen, mit einer Alkalinität von nicht weniger als 0,01 g-Äqu./l, verwendet werden.

3. Verfahren nach Anspruch 1, **dadurch gekennzeichnet, dass** die Behandlung mit alkalischer Lösung durch deren Filtrieren durch die Schicht von gekörntem Serpentinit in Richtung des Filtrationsflusses während der Wasserreinigung oder in der entgegengesetzten Richtung durchgeführt wird.

4. Verfahren nach Anspruch 3, **dadurch gekennzeichnet, dass** am Anfang jedes Filtrationszyklus ein erster Teil des erhaltenen Wassers, entsprechend 3-5 Volumen der gekörnten Serpentinitschicht, von weiteren Chargen von gereinigtem Wasser abgetrennt und zur Herstellung einer alkalischen Lösung für eine Serpentinit-Behandlung im nächsten Zyklus verwendet wird.

5. Verfahren nach einem der Ansprüche 3 oder 4, **dadurch gekennzeichnet, dass** die Wasserfiltration durch zwei oder mehrere aufeinanderfolgend angeordnete Schichten von gekörntem Serpentinit erfolgt, wobei die Dauer des Filtrationszyklus durch den Durchbruch des am wenigsten sorbierten Verunreinigungsbestandteils durch die letzte stromabwärts gelegene Schicht bestimmt wird, gefolgt von einer Behandlung der Schicht, welche die erste in der Reihe war, mit alkalischer Lösung.

6. Verfahren nach Anspruch 5, **dadurch gekennzeichnet, dass** gleichzeitig mit der Wasserfiltration durch genannte mehrere Schichten eine Behandlung einer oder mehrerer Schichten mit alkalischer Lösung durchgeführt wird, wobei die mit alkalischer Lösung behandelte Schicht in dem nächsten Filtrationszyklus als letzte stromabwärts gelegene Schicht verwendet wird, welche dazu verwendet wird, die erste Schicht zu ersetzen, die einer Behandlung mit alkalischer Lösung unterzogen wird.

7. Verfahren nach einem beliebigen der Ansprüche 3 bis 6, **dadurch gekennzeichnet, dass** die Dauer der Behandlung mit alkalischer Lösung oder das Volumen der alkalischen Lösung anhand der Bedingung bestimmt wird, dass nicht weniger als 90 % des am meisten sorbierten Verunreinigungsbestandteils, extrahiert aus dem im Verlauf dessen vorhergehenden Filtrationszyklus gereinigten Wasser, desorbiert werden.

8. Verfahren nach einem beliebigen der Ansprüche 3 bis 7, **dadurch gekennzeichnet, dass** das Verfahren ein periodisches Waschen der Schicht von gekörntem Serpentinit durch ein Wasser- oder Wasser-Luft-Verfahren einschließt.

## Revendications

1. Procédé de conditionnement d'eau, comprenant une filtration d'eau à travers une couche de serpentinite granulée, **caractérisé en ce que** la serpentinite utilisée a une taille de grains de 0,15 à 2 mm, qui avait été au préalable transformée en une matière échangeuse d'anions par traitement avec une solution alcaline, dans lequel la couche de serpentinite est périodiquement traitée avec la solution alcaline à intervalles n'excédant pas celui auquel a lieu un relâchage du composant contaminant le moins sorbé au-dessus de sa concentration maximum autorisée.

2. Procédé selon la revendication 1, **caractérisé en ce qu'**une solution d'hydroxyde de sodium, de potassium, d'ammonium, ou de calcium est utilisée comme une solution alcaline, ou une solution de carbonate de sodium ou de potassium, ou leurs mélanges en différentes combinaisons, avec une alcalinité non inférieure à 0,01 g-éq/l.

3. Procédé selon la revendication 1, **caractérisé en ce que** le traitement avec une solution alcaline est effectué par sa filtration à travers la couche de serpentinite granulée dans le sens d'écoulement de filtration lors d'une purification d'eau ou dans le sens opposé.

4. Procédé selon la revendication 3, **caractérisé en ce que**, au début de chaque cycle de filtration, une première partie de l'eau obtenue, correspondant à 3 à 5 volumes de couche de serpentinite granulée, est séparée de lots suivants d'eau purifiée et utilisée pour préparer une solution alcaline pour un traitement à la serpentinite lors du cycle suivant.

5. Procédé selon la revendication 3 ou 4, **caractérisé en ce que** la filtration d'eau est effectuée à travers deux couches de serpentinite granulée ou plus disposées séquentiellement, la durée du cycle de filtration étant déterminée par le relâchage du composant contaminant le moins sorbé à travers la dernière couche aval, suivi d'un traitement avec une solution alcaline de la première couche aval.

6. Procédé selon la revendication 5, **caractérisé en ce que**, simultanément à la filtration d'eau à travers les plusieurs couches, un traitement d'une couche de plus avec une solution alcaline est effectué, la couche traitée avec une solution alcaline étant utilisée lors du cycle de filtration suivant comme la dernière couche aval, qui est utilisée pour remplacer la première couche, envoyée pour traitement avec une solution alcaline.

7. Procédé selon l'une quelconque des revendications 3 à 6, **caractérisé en ce que** la durée de traitement avec une solution alcaline ou un volume de solution alcaline est déterminé(e) à partir de la condition que pas moins de 90 % du composant contaminant le plus sorbé, extrait de l'eau purifiée au cours de son cycle de filtration précédent, sont désorbés.

8. Procédé selon l'une quelconque des revendications 3 à 7, **caractérisé en ce qu'**il inclut un lavage périodique de la couche de serpentinite granulée par un procédé en voie aqueuse ou eau-air.
